# EUROPEAN PATENT APPLICATION

(11) **EP 1 440 623 A1**
(43) Date of publication of application: **28.07.2004**
(21) Application number: 04001254.4
(22) Date of filing: 21.01.2004
(51) Int. Cl.: A23L 1/236, A23L 2/60

(54) **Alkali metal bisulfates to mask aftertaste of artificial sweeteners**

(30) Priority: 21.01.2003 US 348133
(71) Applicant: Jones-Hamilton Co., Newark, CA 94560 (US)
(72) Inventor: Knueven, Carl J., Bowling Green Ohio 43402 (US)
(74) Representative: Wibbelmann, Jobst, Dr., Dipl.-Chem.

(57) **Abstract**

An ingestible composition includes an artificial sweetener and an alkali metal bisulfate. A method of masking an aftertaste of an artificial sweetener in an ingestible composition, comprises adding to the composition an alkali metal bisulfate. An artificial sweetener composition comprises an artificial sweetener and an alkali metal bisulfate.

## Description

### BACKGROUND OF THE INVENTION

This invention relates in general to ingestible compositions containing artificial sweeteners, and in particular to methods of masking the unpleasant aftertaste often associated with artificial sweeteners in ingestible compositions.

The use of low-calorie, artificial sweeteners in place of sugar for the reduction of caloric intake or other dietary reasons is well known. Some of the better known artificial sweeteners are aspartame, saccharin, and acesulfame K. Although the artificial sweeteners are effective for sweetening and reducing calories, most artificial sweeteners suffer from the disadvantage of leaving an unpleasant aftertaste in the mouth of the user, such as a bitter, metallic, or cloying sweet aftertaste.

Attempts have been made to overcome this objectionable characteristic by combining different materials with the artificial sweetener. For example, U.S. Patent No. 5,510,123 describes food sweetener compositions containing aspartame and a sugar acid, such as a polyuronic, in an amount sufficient to eradicate the undesired lingering aftertaste of the aspartame. U.S. Patent No. 4,9990,354 describes a composition containing honey flavor and/or coconut flavor for enhancing the sweetness and masking the aftertaste of artificial sweeteners.

U.S. Patent No. 3,934,047 describes the use of aluminum potassium sulfate and/or Naringin to mask the lingering sweet aftertaste characteristic of certain artificial sweeteners. These materials are said to be ineffective in masking a bitter aftertaste of artificial sweeteners. Also, the materials are only useful in foods having a pH of at least 5.

There is still a need for improved ingestible compositions that mask the aftertaste of artificial sweeteners.

### SUMMARY OF THE INVENTION

It has been found that it is possible to effectively mask the aftertaste of artificial sweeteners by the use of compositions containing alkali metal bisulfates in combination with the sweeteners.

Accordingly, the present invention relates to an ingestible composition including an artificial sweetener and an alkali metal bisulfate. In some embodiments of the invention, the ingestible composition is a carbonated beverage, and the alkali metal bisulfate is sodium bisulfate.

The invention also relates to a method of masking an aftertaste of an artificial sweetener in an ingestible composition, comprising adding to the composition an alkali metal bisulfate. In some embodiments of the invention, the alkali metal bisulfate masks a bitter or metallic aftertaste of the artificial sweetener.

The invention further relates to an artificial sweetener composition comprising an artificial sweetener and an alkali metal bisulfate. The sweetener composition can be added to beverages and foods.

Various advantages of this invention will become apparent to those skilled in the art from the following detailed description of the preferred embodiments.

### DETAILED DESCRIPTION OF THE PREFERRED EMBODIMENTS

Any type of alkali metal bisulfate can be used to mask the aftertaste of artificial sweeteners according to the invention, Preferably, the alkali, metal bisulfate is sodium bisulfate, potassium bisulfate, or a mixture thereof. The sodium bisulfate is a sodium salt of sulfuric acid generally expressed as NaHSO₄ (CAS Reg. No. 7681-38-1). It is also known as sodium acid sulfate, sodium hydrogen sulfate, and bisulfate of soda.

A preferred sodium bisulfate for use in the invention is the food grade sodium acid sulfate manufactured by Jones-Hamilton Co., 30354 Tracy Road, Walbridge, Ohio 43465. It has been certified as GRAS (Generally Recognized As Safe), and it meets Food Chemicals Codex, 4th Edition Specifications. This sodium acid sulfate has a clean tart taste with an acid strength similar to phosphoric acid.

The Jones-Hamilton sodium acid sulfate is a dry product comprising crystalline solid particles. The particles have a spherical shape with an average diameter of from about 0.03 mm to about 1 mm, typically about 0,75 mm. The product includes sodium bisulfate in an amount of from about 91.5% to about 97.5% by weight (typically about 93%), and sodium sulfate in an amount of from about 2.5% to about 8.5% by weight (typically about 7%). The product is low in impurities, containing less than 0.003% heavy metals as Pb, less than about 0.05% water-insoluble substances, and less than 0.003% selenium (all measured by weight percent). The product has a moisture content (measured by loss on drying) of less than 0.8%.

The potassium bisulfate for use in the invention is a potassium salt of sulfuric acid generally expressed as KHSO₄ (CAS Reg. No. 7646-93-7). It is also known as potassium acid sulfate and potassium hydrogen sulfate.

The alkali metal bisulfate can be used in combination with any type of artificial sweetener, or a mixture of different sweeteners. Some nonlimiting examples of artificial sweeteners are N-L-alpha-aspartyl-L-phenylalanine 1-methyl ester (aspartame); potassium salt of 3,4-dihydro-6-methyl-1,2,3-oxathiazine-4-one-2,2-dioxide (acesulfame-K); sodium salt of 1,2-benzisothiazol-3(2H)-one 1,1-dioxide (saccharin); 4,1',6'-trichloro-galactosucrose (sucralose); sodium salt of cyclohexyl sulfamic acid (cyclamate); monoammonium glycyrrhizinate; neohesperidin dihydrochalcone; thaumatin; and stevioside. Preferably, the artificial sweetener is selected from the group consisting of aspartame, acesulfame-K, saccharin, sucralose, and mixtures thereof.

In one embodiment of the invention, the artificial sweetener and the alkali metal bisulfate are combined to produce an artificial sweetener composition without an unpleasant aftertaste. The artificial sweetener composition can be packaged in bulk for use by a manufacturer of ingestible compositions, such as a soft drink manufacturer, or it can be packaged in sweetener packets for addition to beverages and foods by the consumer.

Another embodiment of the invention relates to an ingestible composition including the artificial sweetener and the alkali metal bisulfate. By "ingestible composition" is meant any composition that can be taken in through the mouth of a human or animal, including both digestible and non-digestible compositions. Some nonlimiting examples of ingestible compositions include carbonated and non-carbonated beverages; a wide variety of foods, such as baked goods, frozen desserts, candies, cereals, and gelatin; and chewing gums. The ingestible composition can also be a medicine that is taken orally. In general, the ingestible composition can be any type of composition that includes a sweetener.

Unlike the materials described in U.S. 3,934,047, the artificial sweetener and the alkali metal bisulfate can be used in an ingestible composition having practically any pH, including those having a pH of not higher than about 4.5. The alkali metal bisulfate has been found to be effective in masking bitter and metallic aftertastes of artificial sweeteners, as well as cloying sweet aftertastes. Preferably, the alkali metal bisulfate is included in the composition at a level of at least about 0.01 grams/100 mL.

The invention also relates to a method of masking an aftertaste of an artificial sweetener in an ingestible composition. The method comprises adding to the composition an alkali metal bisulfate, as described above.

### EXPERIMENT 1 - LEMONADE BEVERAGES

### Introduction

An experiment was conducted to explore the benefits of sodium bisulfate (SBS) in lemonade beverages sweetened with artificial sweeteners.

A range finding exercise was conducted to establish the concentration of SBS required to produce a lemonade beverage at a pH of 3.2. This is the standard pH used by beverage manufacturers to ensure microbiological and keeping qualities in the final drink. A standard citric acidified formulation was used as the reference for this exercise.

Once the acid level was arrived at, a range of equi-sweet lemonades was produced sweetened with a number of sweetener systems in common use in the market. The following sweetener systems were compared: (a) sucrose, (b) aspartame, (c) aspartame and acesulfame K, and (d) aspartame and saccharin.

The flavor profiles of citric acid and SBS acidified beverages were then compared, as described below.

### Results

### (1) pH range finding

The following range of acid levels was evaluated in ready to drink lemonade formulations. The levels are given in units of % w/v (grams/100 mL).

| | Reference | 1 | 2 | 3 | 4 | 5 | 6 |
|---|---|---|---|---|---|---|---|
| Citric | 0.1400 | - | - | - | - | - | - |
| SBS | - | 0.0600 | 0.0800 | 0.1000 | 0.1200 | 0.1400 | 0.1600 |
| Citrate | 0.0400 | 0.0400 | 0.0400 | 0.0400 | 0.0400 | 0.0400 | 0.0400 |
| | | | | | | | |
| pH | 3.2 | 3.8 | 3.2 | 3.0 | 2.9 | 2.7 | 2.6 |

The level of 0.0800% w/v SBS gave a comparable pH to the citric acid reference and this was selected for further work.

### (2) Sensory assessment of beverage systems

Sets of lemonade beverages acidified with citric acid and SBS were prepared with a range of different sweeteners, Each of these sets of beverages was then compared by a trained number of food technologists. The tasters are skilled at generating descriptive terms to characterize beverage products.

The formulations used for this exercise are shown in the Appendix. Below is a summary of the types and levels of sweeteners and acids used in the beverages. All artificial sweetener formulations were formulated to be equi-sweet to the 9% w/v sucrose beverage.

### Sweetener systems:

(a) Sucrose
   9% w/v
   0.14% w/v citric compared to 0.08% w/v SBS
   The two beverages compared very favorably and were considered equally acceptable. Both drinks had a bright lemon flavor with a clean aftertaste. The SBS beverage had a slightly more acidic aftertaste.
(b) Aspartame
   540 ppm
   0.14% w/v citric compared to 0.08% w/v SBS
   The citric acidified reference had what is considered to be a characteristic aspartame flavor profile. The flavor impact was slightly delayed and the aftertaste was lingering and very sweet The SBS acidified beverage had a clean bright flavor with a more syrupy mouthfeel. The aftertaste was clean and left a lemon fruitiness on the palate. This SBS acidified beverage was considered much preferred to the citric reference.
(c) Aspartame: Acesulfame K.
   Aspartame 135 ppm with Acesulfame K 135 ppm
   0.14% w/v citric compared to 0.08% w/v SBS
   The citric acidified reference had a flatter flavor than the only sweetened beverage. There was an astringent bitterness to the aftertaste and some lingering sweetness. The SBS acidified beverage had a similar flavor profile and a much improved aftertaste with the bitter/astringent notes masked. This SBS acidified beverage was considered much preferred to the citric reference.
(d) Aspartame: Saccharin
   Aspartame 160 ppm with Saccharin 80 ppm (as imide)
   0.14% w/v citric compared to 0.08% w/v SBS
   The citric acidified reference had a slightly flatter flavor than the aspartame only sweetened beverage, The aftertaste had an aspirin note along with a significant bitterness and lingering sweetness. The SBS acidified beverage had a similar flavor profile and a much improved aftertaste. The aftertaste was described as fresh and clean with the aspirin/bitter/sweet flavors being masked. This SBS acidified beverage was considered much preferred to the citric reference.

### Conclusions

SBS was shown to have a completely different acid flavor profile from citric acid, and this generated a different sweetness and flavor profile in the final beverage. This is of particular note when SBS is used with artificial sweetener systems. These tend to have fairly unpleasant aftertastes. Aspartame has a characteristic sweet lingering aftertaste, acesulfame K a bitter metallic aftertaste and saccharin has an astringent, bitter, aspirin-like aftertaste. While not intending to be limited by theory, it is believed that the acid flavor release of SBS is more delayed compared to the standard citric acid, and this has a masking effect on the unpleasant lingering notes of the artificial sweeteners.

### Appendix

The different beverage formulations and final product characteristics are shown below. For all the beverages, the syrup preparation and final product preparation were done as follows.
Syrup Preparation:
1. Place sodium benzoate into volumetric flask.
2. Add a portion of the water to the flask.
3. Add sweetener(s), acid (citric acid or SBS), tri-sodium citrate and flavor.
4. Make up to volume with water ensuring all ingredients are dissolved.
Finished Product Preparation:
1. Dilute 1 part syrup with 5.5 parts carbonated water.
2. Cap and invert.

(a-i) Lemonade with Sucrose and Citric Acid

| Syrup Ingredients: | | % w/v |
|---|---|---|
| 1. | Sucrose | 58.500 |
| 2. | Anhydrous Citric Acid | 0.910 |
| 3. | Sodium Benzoate - 20% Solution | 0.488 |
| 4. | Tri-sodium Citrate | 0.260 |
| 5. | Washed lemon oil | 0.650 |
| 6. | Water | To volume |

Final Product Characteristics:
Acid concentration 0.14% w/v
pH 3.2
Sugar 9% w/v
(a-ii) Lemonade with Sucrose and SBS

| Syrup Ingredients: | | % w/v |
|---|---|---|
| 1. | Sucrose | 58.500 |
| 2. | Sodium Bisulfate | 0.520 |
| 3. | Sodium Benzoate - 20% Solution | 0.488 |
| 4. | Tri-sodium Citrate | 0.260 |
| 5. | Washed lemon oil | 0.650 |
| 6. | Water | To volume |

Final Product Characteristics:
Acid concentration 0.08% w/v
pH 3.2
Sugar 9% w/v
(b-i) Lemonade with Aspartame and Citric Acid

| Syrup Ingredients: | | % w/v |
|---|---|---|
| 1. | Aspartame | 0.351 |
| 2. | Anhydrous Citric Acid | 0.910 |
| 3. | Sodium Benzoate - 20% Solution | 0.488 |
| 4. | Tri-sodium Citrate | 0.260 |
| 5. | Washed lemon oil | 0.650 |
| 6. | Water | To volume |

Final Product Characteristics:
Acid concentration 0.14% w/v
pH 3.2
Aspartame 540 ppm
(b-ii) Lemonade with Aspartame and SBS

| Syrup Ingredients: | | % w/v |
|---|---|---|
| 1. | Aspartame | 0.351 |
| 2. | Sodium Bisulfate | 0.520 |
| 3. | Sodium Benzoate - 20% Solution | 0.488 |
| 4. | Tri-sodium Citrate | 0.260 |
| 5. | Washed lemon oil | 0.650 |
| 6. | Water | To volume |

Final Product Characteristics:
Acid concentration 0.08% w/v
pH 3.2
Aspartame 540 ppm
(c-i) Lemonade with Aspartame and Acesulfame K and Citric Acid

| Syrup Ingredients: | | % w/v |
|---|---|---|
| 1. | Aspartame | 0.088 |
| 2. | Acesulfame K | 0.088 |
| 3. | Anhydrous Citric Acid | 0.910 |
| 4. | Sodium Benzoate - 20% Solution | 0.488 |
| 5. | Tri-sodium Citrate | 0.260 |
| 6. | Washed lemon oil | 0,650 |
| 7. | Water | To volume |

Final Product Characteristics:
Acid concentration 0.14% w/v
pH 3.2
Aspartame 135 ppm with Acesulfame K 135 ppm
(c-ii) Lemonade with Aspartame and Acesulfame K and SBS

| Syrup Ingredients: | | % w/v |
|---|---|---|
| 1. | Aspartame | 0.088 |
| 2. | Acesulfame K | 0.088 |
| 3. | Sodium Bisulfate | 0.520 |
| 4. | Sodium Benzoate - 20% Solution | 0.488 |
| 5. | Tri-sodium Citrate | 0.260 |
| 6. | Washed lemon oil | 0.650 |
| 7. | Water | To volume |

Final Product Characteristics:
Acid concentration 0.08% w/v
pH 3 .2
Aspartame 135 ppm with Acesulfame K 135 ppm
(d-i) Lemonade with Aspartame and Saccharin and Citric Acid

| Syrup Ingredients: | | % w/v |
|---|---|---|
| 1. | Aspartame | 0.104 |
| 2. | Saccharin | 0.068 |
| 3. | Anhydrous Citric Acid | 0.910 |
| 4. | Sodium Benzoate - 20% Solution | 0.488 |
| 5. | Tri-sodium Citrate | 0.260 |
| 6. | Washed lemon oil | 0.650 |
| 7. | Water | To volume |

Final Product Characteristics:
Acid concentration 0.14% w/v
pH 3.2
Aspartame 160 ppm with Saccharin 80 ppm (as imide)
(d-ii) Lemonade with Aspartame and Saccharin and SBS

| Syrup Ingredients: | | % w/v |
|---|---|---|
| 1. | Aspartame | 0.104 |
| 2. | Saccharin | 0.068 |
| 3. | Sodium Bisulfate | 0.520 |
| 4. | Sodium Benzoate - 20% Solution | 0.488 |
| 5. | Tri-sodium Citrate | 0.260 |
| 6. | Washed lemon oil | 0.650 |
| 7. | Water | To volume |

Final Product Characteristics:
Acid concentration 0.08% w/v
pH 3.2
Aspartame 160 ppm with Saccharin 80 ppm (as imide)

### EXPERIMENT 2 - FLAVORED WATERS

### Introduction

An experiment was conducted to evaluate the performance of SBS with a range of flavor types to assess the best fit of flavor with the particular acid profile provided by SBS.

A range of flavored waters was prepared acidified with SBS and sweetened with aspartame. These beverages were directly compared with their counterparts that had been acidified with citric acid to an equivalent pH. The formulations of the flavored waters are shown in the appendix.

The tasting was conducted as a round table exercise with a small panel of trained food technologists skilled in describing the overall flavors in these systems.

### Results

The taste testing of the various flavored waters with SBS compared to citric acid is summarized in the following table.

| Flavor Type | Beverage with Citric Acid | Beverage with SBS |
|---|---|---|
| Strawberry | A green strawberry aroma with a confectionery red fruit flavor characteristic and an intensely sweet, lingering aftertaste. | A less intense aroma with a more natural ripe fruit pulp flavor. Some softer more vanilla notes also apparent and a bright clean aftertaste. |
| Peach | A floral style peach flavor with a slightly acid bite and some vanilla notes. A lingeringly sweet aftertaste. | A fresh fruit flavor characteristic of peach flesh. A softer, less acidic flavor overall with a clean, juicy aftertaste. |
| Elderflower | A very floral flavor with an intrusive acid note and lingering sweetness. | A fragrant, light flavor with a mild acidity and a bright fresh flavored aftertaste. |
| Pear | A synthetic, confectionery style of flavor with a bitterness and lingering sweetness in the aftertaste. | Flavor very true to ripe pears. Good sweetness acid balance with a clean, bright, fruity flavor in the aftertaste. |
| Raspberry | A confectionery style of raspberry flavor with some pippy bitterness in the aftertaste and a lingering sweetness, | Overall a fruitier, more balanced flavor with a good raspberry fresh flavor and a clean bright, sharper aftertaste. |
| Cranberry | A fruity impact for this flavor but a very pronounced bitterness and lingering sweetness. | A good berry flavor with a balanced acidity and clean bright aftertaste. |
| Apricot | A sweet fruity flavor with some peach notes and an unbalanced acidity and lingering sweetness. | More ripe apricot flavor with a balanced acidity and clean aftertaste. |
| Tropical | Mixed tropical style flavor with pronounced passion fruit notes. Astringent and bitter aftertaste with lingering sweetness. | Overall more balanced juicy flavor with a clean, fresh, fruity aftertaste. |
| Mint | Very unbalanced combination with the acidity very out of character with the flavor. Once more the aftertaste was intensely acidic. | Much more balanced, softer flavor. More of a spearmint character. Acid sweetness balance good with a bright aftertaste. |

### Conclusions

The performance of SBS as an acidulant for this style of flavored water is consistent across all the flavor types tested. The overall acidity release on the palate gives a softer, rounder flavor type that is particularly compatible with fruit flavors, bringing out the juicy notes in the flavor. In conjunction with artificial sweeteners SBS gives a more natural overall flavor characteristic with a brighter cleaner aftertaste.

### Appendix

The beverage formulations and final product characteristics are shown below.
(a) Various Flavors Containing Aspartame and Citric Acid

| Syrup Ingredients: | | % w/v |
|---|---|---|
| 1. | Aspartame | 0.351 |
| 2. | Anhydrous Citric Acid | 0.910 |
| 3. | Sodium Benzoate - 20% Solution | 0.488 |
| 4. | Tri-sodium Citrate | 0.260 |
| 5. | Flavor | As required |
| 6. | Water | To volume |

Syrup Preparation:
1. Place sodium benzoate into volumetric flask.
2. Add a portion of the water to the flask.
3. Add aspartame, citric acid, tri-sodium citrate and flavor.
4. Make up to volume with water ensuring all ingredients are dissolved.
Finished Product Preparation:
1. Dilute 1 part syrup with 5.5 parts carbonated water.
2. Cap and invert.
Final Product Characteristics:
Acid concentration 0.14% w/v
pH 3.2
Aspartame 540 ppm
(b) Various Flavors Containing Aspartame and SBS

| Syrup Ingredients: | | % w/v |
|---|---|---|
| 1. | Aspartame | 0.351 |
| 2. | Sodium Bisulfate | 0.520 |
| 3. | Sodium Benzoate - 20% Solution | 0.488 |
| 4. | Tri-sodium Citrate | 0.260 |
| 5. | Flavor | As required |
| 6. | Water | To volume |

Syrup Preparation:
1. Place sodium benzoate into volumetric flask.
2. Add a portion of the water to the flask.
3. Add aspartame, SBS, tri-sodium citrate and flavor.
4. Make up to volume with water ensuring all ingredients are dissolved.
Finished Product Preparation:
1. Dilute 1 part syrup with 5.5 parts carbonated water.
2. Cap and invert.
Final Product Characteristics
Acid concentration 0.08% w/v
pH 3.2
Aspartame 540 ppm

The principle and mode of operation of this invention have been explained in its preferred embodiments. However, it must be understood that this invention may be practiced otherwise than as specifically explained without departing from its spirit or scope.

## Claims

1. An ingestible composition including an artificial sweetener and an alkali metal bisulfate.

2. A composition according to claim 1 wherein the alkali metal bisulfate is sodium bisulfate.

3. A composition according to claim 1 wherein the composition contains a fruit flavor.

4. A composition according to claim 1 wherein the composition is a carbonated beverage.

5. A composition according to claim 1 wherein the composition has a pH of not higher than about 4.5.

6. A composition according to claim 1 wherein the alkali metal bisulfate is included at a level of at least about 0.01 grams/100 mL.

7. A composition according to claim 1 wherein the alkali metal bisulfate masks a bitter or metallic aftertaste of the artificial sweetener.

8. A composition according to claim 1 wherein the artificial sweetener is selected from the group consisting of aspartame, acesulfame-K, saccharin, sucralose, and mixtures thereof.

9. A method of masking an aftertaste of an artificial sweetener in an ingestible composition, comprising adding to the composition an alkali metal bisulfate.

10. A method according to claim 9 wherein the alkali metal bisulfate is sodium bisulfate.

11. A method according to claim 9 wherein the composition contains a fruit flavor.

12. A method according to claim 9 wherein the composition is a carbonated beverage.

13. A method according to claim 9 wherein the composition has a pH of not higher than about 4.5.

14. A method according to claim 9 wherein the alkali metal bisulfate is added at a level of at least about 0.01 grams/100 mL.

15. A method according to claim 9 wherein the alkali metal bisulfate masks a bitter or metallic aftertaste of the artificial sweetener.

16. A method according to claim 9 wherein the artificial sweetener is selected from the group consisting of aspartame, acesulfame-K, saccharin, sucralose, and mixtures thereof.

17. An artificial sweetener composition comprising an artificial sweetener and an alkali metal bisulfate.

18. A composition according to claim 17 wherein the alkali metal bisulfate is sodium bisulfate.

19. A composition according to claim 17 wherein the alkali metal bisulfate masks a bitter or metallic aftertaste of the artificial sweetener.

20. A composition according to claim 17 wherein the artificial sweetener is selected from the group consisting of aspartame, acesulfame-K, saccharin, sucralose, and mixtures thereof.
